Europäisches Patentamt

European Patent Office

Office européen des brevets

(19)

(11) Numéro de publication : **0 288 364 B1**

(12) **FASCICULE DE BREVET EUROPEEN**

(45) Date de publication du fascicule du brevet :
**27.05.92 Bulletin 92/22**

(21) Numéro de dépôt : **88400915.0**

(22) Date de dépôt : **15.04.88**

(51) Int. Cl.$^5$ : **F02B 77/02**, F16J 10/04,
C25D 15/02

(54) Procédé d'amélioration de la résistance à l'usure de l'intérieur des moteurs.

(30) Priorité : **17.04.87 FR 8705515**

(43) Date de publication de la demande :
**26.10.88 Bulletin 88/43**

(45) Mention de la délivrance du brevet :
**27.05.92 Bulletin 92/22**

(84) Etats contractants désignés :
**DE ES GB IT**

(56) Documents cités :
**DE-A- 2 620 104**
**FR-A- 1 497 312**
**FR-A- 2 268 871**
**GB-A- 1 200 410**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Leroy, Serge**
**36, route de Valmondois**
**F-95690 Nesles La Vallée (FR)**
Inventeur : **Walti, Frédéric**
**14 Mail Renaissance**
**F-95120 Ermont (FR)**
Inventeur : **Le Douaron, Alain**
**4, rue Pierre de Coubertin**
**F-91120 Palaiseau (FR)**

(74) Mandataire : **Srour, Elie et al**
**REGIE NATIONALE DES USINES RENAULT (S. 0804) 8 & 10 Avenue Emile Zola**
**F-92109 Boulogne Billancourt (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un procédé d'amélioration de la résistance à l'usure de l'intérieur des cylindres d'un moteur, par revêtement de leur surface interne au moyen d'une couche de nickel contenant des particules de carbure de silicium réparties de façon homogènes.

On connait déjà le principe du renforcement de la surface interne d'un cylindre en aluminium sur laquelle on sait faire adhérer un revêtement de nickel électrolytique comportant des particules de carbure de silicium.

Cette disposition est intéressante pour deux raisons :

– elle renforce la résistance mécanique de ce métal, rapidement usé par le frottement des segments du piston :

– elle permet une rétention du lubrifiant par les particules de carbure de silicium qui émergent partiellement de la surface de nickel déposé.

On peut remédier à la faiblesse mécanique des moteurs en aluminium en renforçant les cylindres par des chemises en fonte au prix d'un surcoût dû à cette opération supplémentaire ou en substituant la fonte à l'aluminium pour la totalité du corps du moteur, ce qui permet d'obtenir des formes complexes assurant une grande rigidité du carter cylindre.

Toutefois, on se heurte encore à des limites de résistance mécanique, notamment du fait des températures élevées liées à l'augmentation des performances du moteur par suralimentation ou amélioration de la combustion.

Certaines fontes particulièrement résistances pourraient être utilisées pour la constitution de ces blocs moteurs ; toutefois, outre leur prix de revient, des difficultés apparaîtraient alors au cours des opérations de fonderie et d'usinage.

Il est par conséquent intéressant de chercher à renforcer la résistance mécanique de la fonte traditionnelle par un revêtement superficiel de nickel, comportant des particules de carbure de silicium, du type de celui déposé électrolytiquement sur l'aluminium selon la technique antérieure.

La publication DE-A-2620104 décrit notamment un procédé de traitement de la surface interne d'une chemise ou d'un cylindre, en fonte, d'un bloc moteur où il est procédé au dépôt d'une couche de nickel contenant des particules résistantes telles que du carbure de silicium destinées à améliorer la résistance à l'usure du revêtement.

Mais les tentatives effectuées dans ce sens se sont avérées infructueuses, car le revêtement obtenu se révèle insuffisamment adhérent au bloc sous-jacent ; de plus, le procédé utilisé impliquant une immersion totale de l'élément à revêtir dans un bac contenant le produit de revêtement, ce dernier se dépose alors non exclusivement à la surface des cylindres à renforcer, mais encore sur certaines zones où la présence de particules abrasives est indésirables, on constate de plus que la concentration desdites particules déposées est peu homogène, rendant de ce fait inégale la résistance à l'usure du revêtement obtenu.

La présente invention a pour but de résoudre les difficultés ci-dessus.

L'invention concerne un procédé de traitement caractérisé en ce que d'une part les difficultés étapes du traitement de la surface considérée sont un dégraissage chimique, un premier rinçage à l'eau déminéralisée, une attaque sulfurique électrolytique, un second rinçage à l'eau déminéralisée, un dépôt de nickel électrolytique comportant des particules résistantes et en ce que d'autre part les différents fluides nécessaires au triatement sont apportés en un flux continu et circulent à l'intérieur de la chemise ou du cylindre.

Selon une caractéristique préférentielle de l'invention, le bain de nickel mis en circulation à l'intérieur de la chemise (1) ou du cylindre à traiter est fortement concentré en sel de nickel et fonctionne à bas pH, ce qui permet le passage d'une forte densité de courant et donc un dépôt rapide de métal.

Selon une autre caractéristique préférentielle de l'invention, le courant utilisé pour le dépôt électrolytique de nickel est continu et possède une densité de 25 à 70 A/dm² appliquée pendant 10 à 15 minutes.

Selon une autre caractéristique préférentielle de l'invention le courant utilisé pour le dépôt est électrolytique de nickel est pulsé, sa fréquence variant entre 50 et 100 Hz, et possède un rapport cyclique de l'ordre de 90 %.

L'invention concerne également un dispositif pour la mise en oeuvre du procédé.

Le dispositif pour la mise en oeuvre du procédé reprenant des moyens évoqués dans la publication FR-A-1497312 est constitué de deux éléments d'obturation fermant de façon étanche la cavité de la chemise ou le cylindre à traiter, cette dernier contenant une anode reliée à la borne positive d'un générateur dont la borne négative est mise en contact avec la paroi de la chemise ou du cylindre à traiter, une circulation de fluide étant établie à l'intérieur de ce dernier via des canaux situés dans les éléments d'obturation et au moins une bâche, chauffable, de stockage des fluides mis en circulation au moyen d'une pompe.

Selon des caractéristiques propres à l'invention la chemise ou le cylindre à traiter est une chemise ou un cylindre, en fonte, de bloc moteur, l'anode comprend un panier en titane rempli de billes de nickel de 3 à 5 mm de diamètre et les fluides incluent eau de rinçage, attaque sulfurique électrolytique, bain de nickel contenant des particules résistantes.

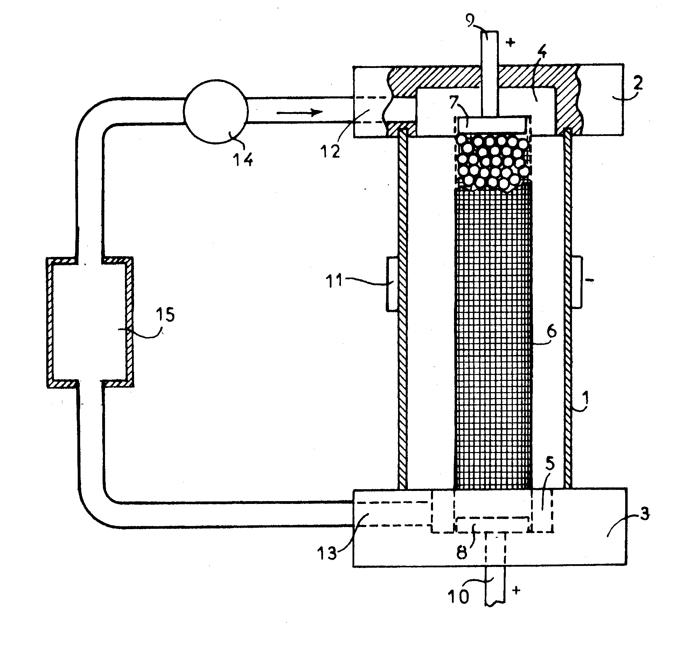

L'invention sera mieux comprise et d'autres buts et avantages de celle-ci apparaitront au cours de la description explicative qui va suivre, en se reportant au dessin schématique annexé donné uniquement à titre d'exemple, illustrant un mode de réalisation de l'invention et dans lequel :

L'étude analytique des causes de la mauvaise adhérence d'une couche rapportée de nickel comportant de façon homogène des particules de carbure de silicium sur de la fonte, a révélé l'importance de l'état de propreté de la surface à revêtir.

Elle doit être dépourvue de toute trace d'huile ou de graisse, d'oxydes et de particules de carbone émergeant à sa surface.

Un premier élément de réponse aux préoccupations ci-dessus est apporté en soumettant le support de fonte pendant 5 à 10 minutes à un décapage électrolytique dans une solution d'acide sulfurique concentré avec une densité de courant élevée.

Ce traitement, précédé et suivi d'un rinçage à l'eau déminéralisée, succède de préférence à un dégraissage chimique.

Le décapage électrolytique ci-dessus permet de désoxyder la fonte sans dissolution de fer, ce qui aurait pour conséquence d'augmenter la quantité de particules de carbone à sa surface dont la présence est nuisible à l'adhérence ultérieure du dépôt de nickel.

Dans les conditions de pH et de densité de courant ci-dessus, l'oxyde de fer est attaqué par l'acide sulfurique, tandis que le fer de la fonte est passivé.

L'importance de l'action mécanique du à la grande quantité d'oxygène dégagée au cours de cette opération permet de décrocher les particules de carbone situées à la surface du support traité.

Ce dernier est maintenant prêt à subir un revêtement de nickel électrolytique comportant des particules de carbure de silicium. Il faut toutefois s'appliquer à éviter toute exposition du support à l'air afin d'empêcher une nouvelle oxydation de la fonte, surtout après son attaque sulfurique.

Ceci est particulièrement difficile à obtenir par les procédés antérieurs, dits "au trempé", selon lesquels les phases de traitement se succèdent par déplacement aérien de la pièce d'un bac à l'autre.

Le procédé selon l'invention pallie l'inconvénient ci-dessus par l'utilisation du dispositif de la figure unique ci-jointe.

Dans l'exemple qui va être décrit, la pièce traitée est une chemise 1 en fonte lamellaire, représentative de la fonte grise utilisée pour les moteurs à futs intégrés.

Toutefois, le principe reste le même si on traite directement la surface des cylindres d'un bloc moteur en fonte non chemisé.

Le procédé consiste à effectuer la circulation des différents liquides successifs nécessaires à la gamme de traitement directement à l'intérieur de la chemise 1, ou des cylindres du bloc moteur concerné.

A cette fin, la chemise 1 est fermée de façon étanche à ses extrémités supérieure et inférieure respectivement par les éléments d'obturation 2 et 3 ; ces derniers présentent des cavités internes 4-5 qui permettent le positionnement d'un panier de titane 6, rempli de billes de nickel de 3 à 5 mm de diamètre, fermé à ses extrémités par des couvercles 7-8 reliés à des bornes positives 9-10 ; une pince 11 constitue la borne négative du dispositif par contact avec la face extérieure de la chemise à traiter.

On notera encore un canal d'arrivée de fluide 12 traversant l'élément supérieure 2 et un canal 13 d'évacuation, dans l'élément inférieur 3.

Ces canaux 12-13 constituent un circuit fermé comportant en série une pompe 14 de circulation et une ou plusieurs bâche 15 de stockage chauffée permettant l'alimentation de la pièce 1 traitée par les différents liquides constituant le cycle de traitement :
– eau déminéralisée de rinçage,
– dégraissage chimique,
– attaque sulfurique électrolytique,
– bain de nickel comportant les particules résistantes telles que du carbure de silicium.

Le dépôt mixte de nickel et de particules intervient donc par circulation en continu et en l'absence d'air dans la chemise 1 d'une solution fortement concentrée en sel de nickel et fonctionnant à bas pH.

Un tel bain est utilisé car il permet un passage plus important de courant, et donc d'obtenir des dépôts plus rapides ; de plus, il n'est pas difficile à entretenir.

On pourrait également utiliser un bain de Watts de composition ci-dessous :

- sulfate de nickel          = 300 g/l

- chlorure de nickel         = 30 g/l

- acide borique              = 40 g/l

| - pH | = 4,4 (à la sonde) |
|---|---|
| - température | = 50°C |

ou encore un nickel sulfamate tel que :

| - sulfamate de nickel | = 600 g/l |
|---|---|
| - chlorure de nickel | = 60 g/l |
| - acide borique | = 90 g/l |
| - pH | = 3,5 |
| - température | = 50°C |

A la première solution ci-dessus préférentiellement utilisée, on ajoute 20 à 100 g/l de particules de carbure de silicium, dont la taille moyenne est de 4 à 5 microns.

La densité de courant continu appliquée à la chemise 1 est de 25 à 70 A/dm$^2$, pendant 10 à 15 minutes. On obtient ainsi un revêtement dont la dûreté peut atteindre 360 Vickers et même au-delà grâce à l'ajout de composés organiques dans l'électrolyte.

Au lieu de courant continu, on peut également utiliser un courant pulsé, dont la densité est constante pour un temps limité (dit d'impulsion), puis nulle pendant un temps mort ; la somme des deux durées ci-dessus constitue la période T du cycle et le rapport cyclique R est le rapport de temps d'impulsion sur la période T.

De bons résultats sont obtenus en utilisant un courant pulsé dont la fréquence varie entre 50 et 100 Hz et pour un rapport cyclique de l'ordre de 90 %.

Dans ces conditions, on obtient des duretés de revêtement sensiblement supérieures à celles résultant de l'application de courant continu.

Dans les deux cas, la quantité de particules de carbure de silicium est de l'ordre de 3 à 5 % du poids total du revêtement déposé et ce dernier possède une épaisseur résiduelle de 60 à 80 microns, après usinage de finition de la chemise.

Compte tenu du renouvellement constant de l'électrolyte sur la surface à traiter selon le procédé de l'invention, on n'assiste pas à un appauvrissement en ions comme dans certains procédés antérieurs ; de ce fait, on constate une vitesse de déposition du revêtement plus élevée.

De plus, le rinçage effectué en continu entre chaque opération est particulièrement efficace, au regard notamment des rinçages par trempage ; il a notamment pour effet de retirer les particules non adhérentes de carbone apparues lors du décapage préliminaire.

Enfin, on constate bien qu'il n'y a plus de contact de la surface à traiter avec l'air ambiant entre deux phases de traitement, et donc pas de risque d'oxydation avant le dépôt de nickel.

Compte tenu de la qualité du revêtement et de son adhérence, des usinages de finition peuvent être réalisés dans de bonnes conditions. On ajuste ainsi la segmentation et la surface du fût, ce qui permet de limiter l'usure du moteur et diminue sa consommation d'huile.

**Revendications**

1. Procédé de traitement de la surface interne d'une chemise (1) ou d'un cylindre, en fonte, de bloc moteur, pour déposer une couche de nickel contenant des particules résistantes telles que du carbure de silicium pour en améliorer la résistance à l'usure caractérisé en ce que d'une part les différentes étapes du traitement de la surface considérée sont un dégraissage chimique, un premier rinçage à l'eau déminéralisée, une attaque sulfurique électrolytique, un second rinçage à l'eau déminéralisée, un dépôt de nickel électrolytique comportant des particules résistantes et en ce que d'autre part les différents fluides nécessaires au traitement sont apportés en un flux continu et circulent à l'intérieur de la chemise (1) ou du cylindre.

2. Procédé de traitement selon la revendication 1, caractérisé en ce que le bain de nickel mis en circulation à l'intérieur de la chemise (1) ou du cylindre à traiter est fortement concentré en sel de nickel et fonctionne à bas pH, ce qui permet le passage d'une forte densité de courant et donc un dépôt rapide de métal.

3. Procédé de traitement selon la revendication 2, caractérisé en ce que le courant utilisé pour le dépôt électrolytique de nickel est continu et possède une densité de 25 à 70 A/dm$^2$ appliquée pendant 10 à 15 minutes.

4. Procédé de traitement selon la revendication 2, caractérisé en ce que le courant utilisé pour le dépôt électrolytique de nickel est pulsé, sa fréquence variant entre 50 et 100 Hz, et possède un rapport cyclique de l'ordre de 90 %.

5. Dispositif pour la mise en oeuvre du procédé selon l'une quelconque des revendications précédentes constitué de deux éléments d'obturation (2-3) fermant de façon étanche la cavité de la chemise (1) ou le cylindre à traiter, cette dernière contenant une anode (7-8) reliée à la borne positive d'un générateur dont la borne négative est mise en contact avec la paroi de la chemise (1) ou du cylindre à traiter, une circulation de fluide étant établie à l'intérieur de ce dernier via des canaux (12-13) situés dans les éléments d'obturation (2-3) et au moins une bâche (15), chauffable, de stockage des fluides mis en circulation au moyen d'une pompe (15), caractérisé en ce que la chemise ou le cylindre à traiter est une chemise ou un cylindre, en fonte, de bloc moteur, l'anode comprend un panier en titane (6) rempli de billes de nickel de 3 à 5 mm de diamètre et les fluides incluent eau de rinçage, attaque sulfurique électrolytique, bain de nickel contenant des particules résistantes.

## Patentansprüche

1. Verfahren zur Behandlung der Innenwandung einer Lauf buchse (1) oder eines Zylinders, aus Gußeisen, eines Zylinderblockes zur Abscheidung einer Schicht aus Nickel, welche widerstandsfähige Teilchen, wie z.B. Silizium carbid, enthält um ihren Verschleißwiderstand zu ver bessern, dadurch gekennzeichnet, daß einerseits die verschiedenen Behandlungsschritte der in Betracht gezoge nen Wandung aus einem chemischen Entfetten, einer ersten Spülung mit destilliertem Wasser, einer elektrolytischen schwefelhaltigen Beaufschlagung, einer zweiten Spülung mit destilliertem Wasser und einer elektrolytischen Nickelabscheidung mit widerstandsfähigen Teilchen besteht und andererseits die für die Behandlung erforderlichen Fluide kontinuierlich zugeführt werden und im Inneren der Laufbuchse (1) oder des Zylinders zirkulieren.

2. Verfahren nach Anspruch 1, dadurch gekennzeichnet, daß das im Inneren der zu behandelnden Laufbuchse (1) oder des Zylinders zirkulierende Nickelbad eine starke Nickel salzkonzentration aufweist und bei einem niedrigen pH- Wert funktioniert, um so eine hohe Stromdichte und demzu folge eine rasche Metallabscheidung zu ermöglichen.

3. Verfahren nach Anspruch 2, dadurch gekennzeichnet, daß der zur elektrolytischen Nickelabscheidung verwendete Strom kontinuierlich ist und eine Dichte von 25 bis 70 A/dm$^2$ aufweist und während 10 bis 15 Minuten angelegt wird.

4. Verfahren nach Anspruch 2, dadurch gekennzeichnet, daß der zur elektrolytischen Nickelabscheidung verwendete Strom impulsförmig ist, wobei seine Frequenz zwischen 50 und 100 Hz variiert und sein Tastverhältnis in der Größenordnung von 90 % liegt.

5. Vorrichtung zur Durchführung des Verfahrens nach einem der vorhergehenden Ansprüche, bestehend aus zwei Ver schlußteilen (2, 3), die in dichter Form den Innenraum der zu behandelnden Laufbuchse (1) oder des Zylinders verschließen, wobei eine Anode (7, 8) vorgesehen ist, die mit dem positiven Anschluß eines Generators verbunden ist, dessen negativer Anschluß mit der Wand der zu be handelnden Laufbuchse (1) oder des Zylinders verbunden ist, wobei eine Fluidzirkulation im Inneren der letzteren mittels Kanälen (12, 13) aufrechterhalten wird, die in den Verschlußteilen (2, 3) vorgesehen sind und wenigstens ein heizbares Vorratsgefäß (15) zur Aufnahme von mittels einer Pumpe (15) in Zirkulation versetzbaren Fluiden vorgesehen ist, dadurch gekennzeichnet, daß die zu behan delnde Laufbuchse oder der Zylinder eine aus Gußeisen beste hende Laufbuchse oder ein Zylinder eines Zylinder blocks ist, daß die Anode einen Titankorb (6) aufweist, der mit Nickelkugeln von 3 bis 5 Millimetern Durchmesser gefüllt ist und daß die Fluide das Spülwasser, die elektrolytische schwefelhaltige Beaufschlagung und das Nickelbad mit widerstandsfähigen Teilchen, aufweisen.

## Claims

1. Method for treating the inner surface of a cast iron jacket (1) or cylinder of an engine unit in order to deposit a layer of nickel containing resistant particles such as silicon carbide in order to improve its wear resistance, characterized in that, on the one hand, the various stages of treatment of the surface in question comprise chemical degreasing, initial rinsing with demineralized water, electrolytic sulphuric etching, second rinsing with demineralized water and depositing of electrolytic nickel comprising resisting particles and, on the other hand, in that the various fluids needed for the treatment are supplied in a continuous flux and circulate within the jacket (1) or cylinder.

2. Treatment method as claimed in claim 1, characterized in that the nickel bath caused to circulate within the jacket (1) or the cylinder to be treated has a -high concentration of nickel salt and operates at low pH allowing the passage of a strong current density and therefore rapid depositing of metal.

3. Treatment method as claimed in claim 2, characterized in that the current used for the electrolytic nickel deposit is direct and has a density of 25 to 70 A/dm$^2$ applied for 10 to 15 minutes.

4. Treatment method as claimed in claim 2, characterized in that the current used for the electrolytic nickel deposit is pulsating, its frequency varying between 50 and 100 Hz, and has a cyclical ratio of approximately 90%.

5. A device for implementing the method as claimed in any one of the preceding claims, comprising two closure members (2-3) closing the cavity of the jacket (1) or cylinder to be treated in a leak-tight manner, this latter containing an anode (7-8) connected to the positive terminal of a generator whose negative terminal is contacted with the wall of the jacket (1) or cylinder to be treated, a fluid circulation being established within this latter via ducts (12-13) disposed in the closure members (2-3) and at least one storage tank (15), which may be heated, for the fluids circulated by means of a pump (15), characterized in that the jacket or the cylinder to be treated is a cast iron jacket or cylinder of an engine unit, the anode comprises a titanium basket (6) filled with nickel balls having a diameter of 3 to 5 mm and the fluids include rinsing water, electrolytic sulphuric etch and a nickel bath containing resistant particles.